(19) **Europäisches Patentamt / European Patent Office / Office européen des brevets**

(11) **EP 4 755 218 A1**

(12) **EUROPEAN PATENT APPLICATION**
published in accordance with Art. 153(4) EPC

(43) Date of publication:
**10.06.2026  Bulletin 2026/24**

(21) Application number: **24849470.0**

(22) Date of filing: **24.07.2024**

(51) International Patent Classification (IPC):
*A24F 40/46* (2020.01)     *A24F 40/40* (2020.01)
*A24F 40/95* (2020.01)     *A24F 40/50* (2020.01)
*H02J 7/00* (2026.01)     *A24F 40/42* (2020.01)
*H01G 11/08* (2013.01)

(52) Cooperative Patent Classification (CPC):
A24F 40/40; A24F 40/42; A24F 40/46; A24F 40/50;
A24F 40/95; H01G 11/08; H02J 7/00

(86) International application number:
**PCT/KR2024/010762**

(87) International publication number:
**WO 2025/028901 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:  01.08.2023  KR 20230100358
04.01.2024  KR 20240001515

(71) Applicant: **KT&G Corporation**
**Daedeok-gu**
**Daejeon 34337 (KR)**

(72) Inventors:
• **PARK, Sang Cheol**
**Suwon-si, Gyeonggi-do 16469 (KR)**

• **KIM, Jae Hyuk**
**Seoul 06352 (KR)**
• **SEO, Jang Won**
**Daejeon 34023 (KR)**
• **WOO, Young Min**
**Hwaseong-si, Gyeonggi-do 18391 (KR)**
• **LEE, Won Kyeong**
**Guri-si, Gyeonggi-do 11920 (KR)**
• **JANG, Chul Ho**
**Bucheon-si, Gyeonggi-do 14725 (KR)**
• **JUNG, Jin Chul**
**Daejeon 34079 (KR)**
• **HAN, Dae Nam**
**Seoul 06331 (KR)**

(74) Representative: **Ter Meer Steinmeister & Partner**
**Patentanwälte mbB**
**Nymphenburger Straße 4**
**80335 München (DE)**

(54) **AEROSOL GENERATION DEVICE, AND METHOD FOR PROTECTING AEROSOL GENERATION DEVICE**

(57)    According to an embodiment of the present disclosure, an aerosol generating device includes a housing including a battery receiving space; a heater which is arranged inside the housing and heats an aerosol generating material; and a power source which supplies power to the heater, wherein the power source includes a first battery which is detachably coupled to the battery receiving space and supplies power to the heater; and a second battery which is arranged inside the housing, is connected in parallel with the first battery when the first battery is coupled to the battery receiving space, and supplies the power to the heater .

EP 4 755 218 A1

# FIG. 8

## Description

### Technical Field

The present disclosure relates to an aerosol generating device and a method of protecting the aerosol generating device by sensing battery disconnection therein.

### Background Art

In recent years, there has been an increasing demand for alternative methods for overcoming the disadvantages of conventional cigarettes. For example, there is an increasing demand for a method of generating aerosols by heating an aerosol generating material, rather than a method of generating aerosols by burning a cigarette. Accordingly, research on a heated aerosol generating device has been actively conducted.

Also, due to the growing interest in environmental issues around the world, there is a demand that batteries be environmentally friendly and safe throughout their entire life cycle, from production to recycling. Accordingly, in the field of e-cigarettes, research on removable batteries has been conducted along with promoting the development of related technologies, such as battery reuse and recycling.

### Disclosure of Invention

Technical Problem

When an aerosol generating device includes a removable battery, the removable battery may be unintentionally disconnected by an external impact or vibration. When the removable battery is disconnected, the aerosol generating device may suffer fatal damage, such as data loss, due to sudden power-off of the power supply. Therefore, a method of protecting a system of the aerosol generating device from an abnormal disconnection of the removable battery is required.

The technical problem of the present disclosure is not limited to the above, and other technical problems may be derived from the following embodiments.

Solution to Problem

According to an embodiment, an aerosol generating device includes a housing including a battery receiving space; a heater which is arranged inside the housing and heats an aerosol generating material; and a power source which supplies power to the heater, wherein the power source includes a first battery which is detachably coupled to the battery receiving space and supplies power to the heater; and a second battery which is arranged inside the housing, is connected in parallel with the first battery when the first battery is coupled to the battery receiving space, and supplies the power to the heater.

According to an embodiment, a method of protecting an aerosol generating device includes calculating a discharge rate of a power source including a first battery detachably coupled to the aerosol generating device and a second battery arranged inside the aerosol generating device and connected in parallel with the first battery when the first battery is coupled thereto; comparing the calculated discharge rate of the power source with a preset reference value, and determining that the first battery is in a removed state where the first battery is electrically disconnected from the second battery when the discharge rate of the powers source is greater than the reference value; and counting a time of the removed state, and executing a protection process for preserving system data for controlling a heating function of the heater when the time of the removed state is maintained for a certain time, wherein the first battery has a first discharge rate and the second battery has a second discharge rate greater than the first discharge rate, and the reference value is determined based on the first discharge rate and the second discharge rate. Advantageous Effects of Invention

An aerosol generating device according to various embodiments of the present disclosure may protect a system of the aerosol generating device from abnormal disconnection of a removable battery mounted in the aerosol generating device.

Effects by the embodiments are not limited to the above-described effects, and effects that are not described may be clearly understood by those skilled in the art from the present specification and the accompanying drawings.

### Brief Description of Drawings

FIG. 1 is a perspective view of an aerosol generating device according to an embodiment.

FIGS. 2 to 6 are diagrams for describing an aerosol generating device according to an embodiment.

FIG. 7 is an exploded perspective view showing some components of an aerosol generating device according to an embodiment.

FIG. 8 is a block diagram illustrating hardware components of an aerosol generating device according to an embodiment.

FIG. 9 is a diagram for describing history information regarding a first battery in an aerosol generating device, according to an embodiment.

FIG. 10 is a flowchart of a method of protecting an aerosol generating device based on a discharge rate of a power source, according to an embodiment.

**Best Mode for Carrying out the Invention**

**Mode for the Invention**

The terms used in embodiments are selected from general terms currently widely used as much as possible in consideration of functions in the present disclosure, but may vary according to the intentions of those skilled in the art or precedents, the emergence of new technologies, and the like. In addition, in a specific case, there is also a term arbitrarily selected by the applicant, and in this case, the meaning thereof is described with reference to detail in the relevant description of the disclosure. Therefore, the terms used in the present disclosure should be defined based on the meaning of the terms and the overall content of the present disclosure, rather than the mere names of the terms.

Throughout the specification, when a part "includes" a component, unless otherwise specified, the part may further include other components, rather than excluding the other components. In addition, the term, such as "portion" or "module", described with reference to the specification refers to a unit for processing at least one function or operation, which may be implemented in hardware or software or may be implemented in a combination of hardware and software.

In addition, in describing the embodiments disclosed in the present specification, when it is determined that the specific description of the related known technology may obscure the gist of the embodiments disclosed herein, the detailed description thereof is omitted. In addition, it should be understood that the accompanying drawings are merely for facilitating understanding of the embodiments disclosed in the present specification, rather than limiting the technical concept disclosed in the present specification by the accompanying drawings, and include all modifications, equivalents, and alternatives included in the spirit and the technical scope of the present disclosure.

Although ordinal terms, such as first, second, and the like, may be used to describe various components, the components are not limited by the terms. The terms are only used for the purpose of distinguishing one component from another.

It should be understood that when a component is referred to as being "connected" or "coupled" to another component, the component may be directly connected or coupled to the other component, but there may be other components in between. In contrast, when a component is referred to as being "directly connected" or "directly coupled" to another component, it should be understood that there are no components in between.

Singular expressions include plural expressions unless the context clearly indicates otherwise.

Embodiments of the present disclosure are described in detail below with reference to the accompanying drawings so that those skilled in the art may easily implement the embodiments. However, the present disclosure may be embodied in many different forms and may not be limited to the embodiments set forth herein.

Regardless of the drawing symbols, identical or similar components are given the same reference number and duplicate descriptions thereof are omitted.

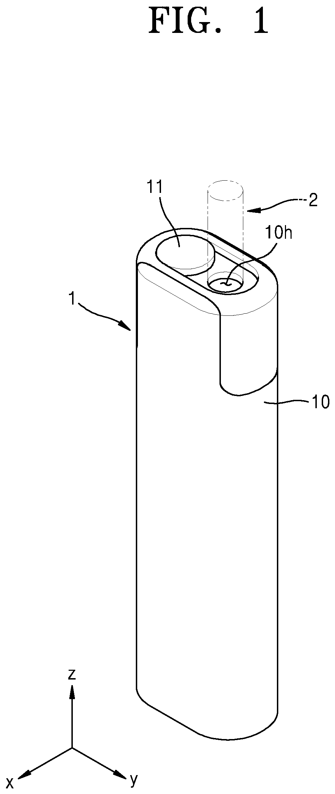

FIG. 1 is a perspective view of an aerosol generating device according to an embodiment.

An aerosol generating device 1 may generate and provide aerosols.

The aerosol generating device 1 may include a body 10. The body 10 forms an overall exterior of the aerosol generating device 1 and may include a space therein. At least one of an article receiving portion 10h, a heater (not shown), a controller (not shown), and a battery (not shown) may be arranged inside the body 10.

The article receiving portion 10h may provide a space where an aerosol generating article 2 may be detachably coupled (inserted). The aerosol generating article 2 may include an aerosol generating material that is heated by a heater to generate aerosols. The article receiving portion 10h may provide a space that is open toward the outside of the body 10 so that the aerosol generating article 2 is inserted.

The article receiving portion 10h may be recessed toward the inside of the body 10 so that at least a part of the aerosol generating article 2 can be inserted. The depth at which the article receiving portion 10h is recessed may correspond to the length of an area in the aerosol generating article 2, where the aerosol generating material and/or the medium is contained. A part of the aerosol generating article 2 may be inserted into the body 10 and another part of the aerosol generation article 2 may protrude toward the outside of the body 10. A user may hold a part of the aerosol generating article 2 exposed toward the outside of the body 10 in his/her mouth and inhale air containing the aerosols.

The body 10 may further include a cover 11 that opens or closes the article receiving portion 10h. The cover 11 may be movably disposed on the body 10 to expose the article receiving portion 10h to the outside of the aerosol generating device 1 or may cover the article receiving portion 10h not to expose the article receiving portion 10h to the outside of the aerosol generating device 1. For example, the cover 11 may open the article receiving portion 10h at a first position to expose the article receiving portion 10h to the outside, which allows the aerosol generating article 2 to be inserted into the article receiving portion 10h. In addition, the cover 11 may close the article receiving portion 10h by moving from the first position to the second position not to expose the article receiving portion 10h to the outside, which protects the article receiving portion 10h from external impact or external foreign substances.

A heater (not shown) arranged inside the body 10 may heat the aerosol generating article 2. For example, the heater may include a tubular heating element, a plate-shaped heating element, a needle-shaped heating element or a rod-shaped heating element. The heater may include an electrical resistance heater and/or an induction heater.

For example, the heater may be a resistive heater. The heater includes an electrically conductive track, wherein the heater may be heated as a current flows in the electrically conductive track. The heater may be electrically connected with a power source. The heater may receive the power from the power source to generate heat.

For example, the heater may be a multi-heater. The heater may include a first heater and a second heater. The first heater and the second heater may be sequentially heated or may be simultaneously heated.

The aerosol generating device 1 may include an induction coil. The induction coil may heat the heater. The heater may include a susceptor. The susceptor may be heated by a magnetic field generated by an alternating current flowing through the induction coil. The magnetic field may pass through the susceptor and may generate eddy currents in the interior of the susceptor. The eddy currents may cause the susceptor to generate heat.

For another example, the susceptor may be included inside the aerosol generating article 2. The susceptor inside the aerosol generating article 2 may be heated by the magnetic field generated by the alternating current flowing through the induction coil. The susceptor may be arranged inside the aerosol generating article 2 and may not be electrically connected to the aerosol generating device 1. The susceptor may be inserted into the article receiving portion 10h together with the aerosol generating article 2 and may be removed from the article receiving portion 10h together with the aerosol generating article 2. When the alternating current flows through the induction coil, the aerosol generating article 2 may be heated by the susceptor inside the aerosol generating article 2.

The power source may supply the power to operate the components of the aerosol generating device 1. The power source may be a battery capable of storing electrical energy. The power source may supply the power to a component, such as the heater, the induction coil, or the controller. The power source may be configured by connecting two or more batteries in parallel. The two or more batteries may have different discharge rates. The two or more batteries may have different capacities.

A first battery among the two or more batteries may be a power source detachable from the aerosol generating device 1. For example, the first battery may be detachably coupled to a battery receiving space (not shown) of the aerosol generating device 1 and may be electrically connected to a terminal of the battery receiving space to supply the power to components of the aerosol generating device 1.

A second battery among the two or more batteries may be a power source built in the aerosol generating device 1. For example, the second battery may be a power source mounted on a printed circuit board (PCB) connecting various electronic elements constituting the aerosol generating device 1.

The controller may control the overall operation of the aerosol generating device 1. The controller may be mounted to the PCB. The controller may control operations of the components, such as the heater, the induction coil, and the power source. The controller may control operations of a display, an actuator (motor), and the like provided in the aerosol generating device 1. The controller may confirm a state of each of the components of the aerosol generating device 1 to determine whether the aerosol generating device 1 is in an operable state.

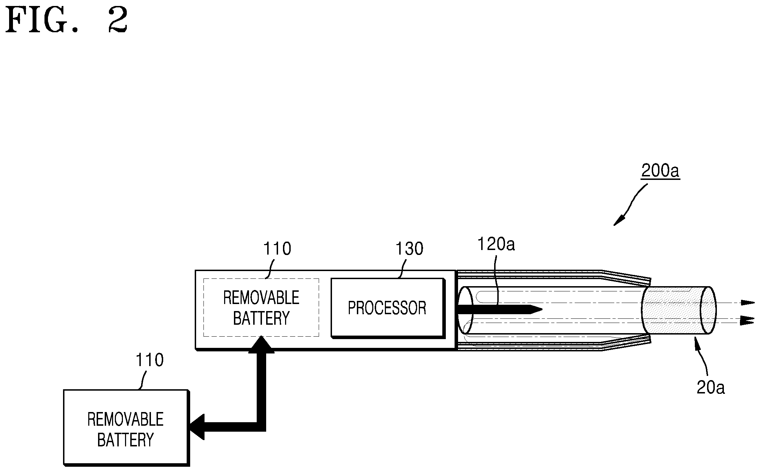

FIGS. 2 to 6 are diagrams for describing the aerosol generating device according to an embodiment.

The aerosol generating device may be implemented in various types of aerosol generating devices 200a to 200e, such as devices using electrical resistance heating or induction heating, an additional vaporizer, a cartridge, or the like. Although some elements to describe the types of the aerosol generating devices 200a to 200e are shown in FIGS. 2 to 6, other general-purpose elements may be further included in the aerosol generating devices 200a to 200e, in addition to the elements shown in FIG. 2 to FIG. 6.

FIG. 2 is a diagram of the aerosol generating device 200a using an electrical resistance according to an embodiment. The aerosol generating device 200a may be one type of the aerosol generating device 100.

Referring to FIG. 2, the aerosol generating device 200a may include a removable battery 110, a heater 120a, and a processor 130.

A cigarette 20a may be inserted into a receiving space inside the aerosol generating device 200a. When the cigarette 20a is inserted into the aerosol generating device 200a, the aerosol generating device 200a may generate aerosols from the cigarette 20a by heating the cigarette 20a using the heater 120a. Since the generated aerosols pass through the cigarette 20a and are delivered to the user, the user may smoke the cigarette 20a.

The heater 120a may be heated by the power supplied from the removable battery 110. The heater 120a may be an electrical resistance heater. For example, the heater 120a includes an electrically conductive track, wherein the heater 120a may be heated as current flows along the electrically conductive track.

As the electrically conductive track of the heater 120a is made of an electrically resistive material, the heating temperature may be determined according to the power consumption of the resistance, and the resistance value of the electrically conductive track may be set based on the power consumption of the resistance of the electrically conductive track. The resistance value of the electrically conductive track may be variously set according to a constituent material, a length, a width, a thickness, or a pattern of the electrically resistive material.

According to characteristics of a temperature coefficient of the resistance of the electrically conductive track, the magnitude of the internal resistance may increase as the temperature increases. For example, the temperature of the electrically conductive track may be proportional to the magnitude of the resistance in a certain temperature section. Using this principle, the heater 120a made of the electrically conductive track may heat the cigarette 20a by using the electrical resistance.

The electrically conductive track may be fabricated from tungsten, gold, platinum, silver copper, nickel palladium, or combinations thereof. In addition, the electrically conductive track may be doped with a suitable doping material and may include an alloy.

The heater 120a may have various shapes, such as a tubular shape, a plate shape, a needle shape, and a rod shape. In addition, a plurality of heaters 120a may be arranged. The heater 120a may be inserted into the interior of the cigarette 20a and used for internal heating to heat the interior of the cigarette 20a.

The removable battery 110 may be removed from or mounted on the aerosol generating device 200a, and when the removable battery 110 is mounted on the aerosol generating device 200a, the power may be supplied from the removable battery 110 to the heater 120a to control the temperature of the electrically conductive track for the heating operation of the heater 120a.

The processor 130 may control the heating operation of the heater 120a by controlling the power supplied to the heater 120a. For example, the processor 130 may control the temperature at which the cigarette 20a is heated by the heater 120a, according to a temperature profile.

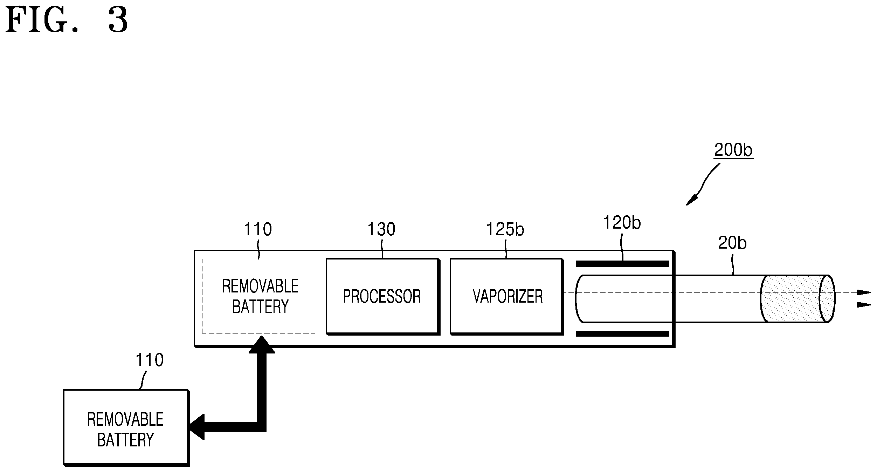

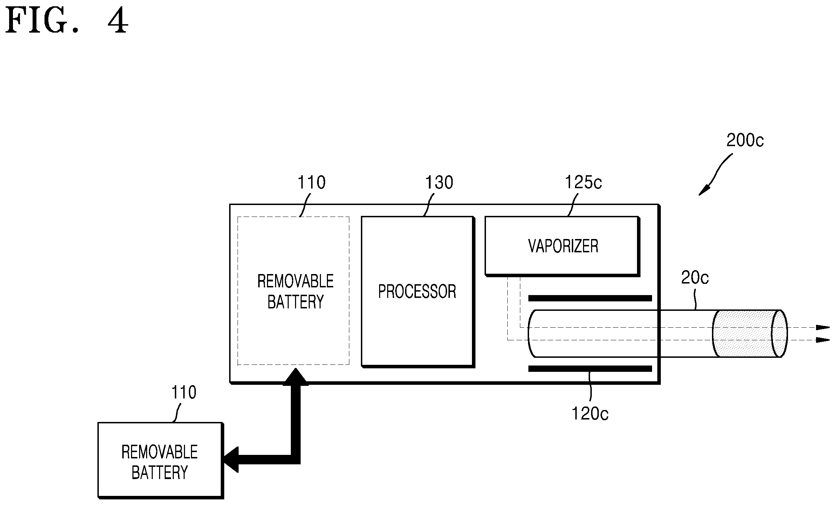

FIGS. 3 and 4 are diagrams to describe aerosol generating devices 200b and 200c further including vaporizers 125b and 125c, according to embodiments. Each of the aerosol generating devices 200b and 200c may be one type of the aerosol generating device 100.

Referring to FIGS. 3 and 4, the aerosol generating devices 200b and 200c further include the vaporizers 125b and 125c. Cigarettes 20b and 20c may be inserted into the inner spaces of the aerosol generating devices 200b and 200c, respectively.

FIG. 3 shows the vaporizer 125b and the heater 120b arranged in a row. However, FIG. 4 shows the vaporizer 125c and the heater 120c arranged in parallel. That is, the aerosol generating devices 200b and 200c may be distinguished by the way the vaporizer 125b is arranged.

The heaters 120b and 120c may be heated by the power supplied from the removable battery 110. The heaters 120b and 120c, which are electrical resistance heaters, may include, e.g., electrically conductive tracks.

Unlike the heater 120a described with reference to FIG. 2, the heaters 120b and 120c in FIGS. 3 and 4 may be implemented using external heating, where the heaters 120a and 120b are arranged around the circumferences of the cigarettes 20b and 20c and heat the outer surfaces of the cigarettes 20b and 20c.

The vaporizers 125b and 125c may heat a liquid composition to generate aerosols, wherein the generated aerosols may be delivered to the user through the cigarettes 20b and 20c. That is, the aerosols generated by the vaporizers 125b and 125c may be delivered along airflow passages of the aerosol generating devices 200b and 200c, wherein the airflow passages may be configured to allow the aerosols generated by the vaporizers 125a and 125c to pass through the cigarettes 20b and 20c and be delivered to the user.

The vaporizers 125b and 125c may include a liquid storage portion, a liquid transfer means, and a heating element (or vaporization element). However, each of the liquid storage portion, the liquid transfer means, and the heating element may be arranged, as an independent module, in another position in the aerosol generating device 100 than the vaporizers 125b and 125c.

The liquid storage portion may store the liquid composition. For example, the liquid composition may be a liquid including a tobacco-containing material including a volatile tobacco flavor component or may be a liquid including non-tobacco material. The liquid storage portion may be fabricated to be detachable from the vaporizers 125b and 125c or may be integrally with the vaporizers 125b and 125c. For example, the liquid composition may include water, a solvent, ethanol, a plant extract, a fragrance, a flavoring agent, or a vitamin mixture. In addition, the liquid composition may include an aerosol forming agent, such as glycerin and propylene glycol.

The liquid transfer means may transfer the liquid composition of the liquid storage portion to the heating element. For example, the liquid transfer means may be a wick such as, but not limited to, cotton fibers, ceramic fibers, glass fibers, porous ceramics.

The heating element provided in the vaporizers 125b and 125c is an element for heating (vaporizing) the liquid composition delivered by the liquid transfer means. For example, the heating element may be, but is not limited to, a metal heating wire, a metal heating plate, a ceramic heater, or the like. In addition, the heating element may be composed of a conductive filament, such as a nichrome wire, and may be arranged in a structure wound around the liquid transfer means. The heating element may be heated by the current supply and may transfer heat to the liquid composition in contact with the heating element to heat the liquid composition. As a result, aerosols may be generated. Accordingly, the vaporizers 125b and 125c may also be referred to as other terms, such as a cartomizer or an atomizer.

The removable battery 110 may be removed from or mounted on the aerosol generating devices 200b and 200c, and when the removable battery 110 is mounted on the aerosol generating devices 200b and 200c, the heaters 120b and 120c and the vaporizers 125b and 125c may be supplied with the power from the removable battery 110 for the heating operations of the heaters 120b and 120c and the vaporizers 125b and 125c.

The processor 130 may control the heating operations of the heaters 120b and 120c and the vaporizers 125b and 125c by controlling the power supplied to the heaters 120b and 120c and the vaporizers 125b and 125c. For example, the processor 130 may control the temperature at which the cigarettes 20b and 20c are heated by the heaters 120b and 120c and the vaporizers 125b and 125c, according to a temperature profile.

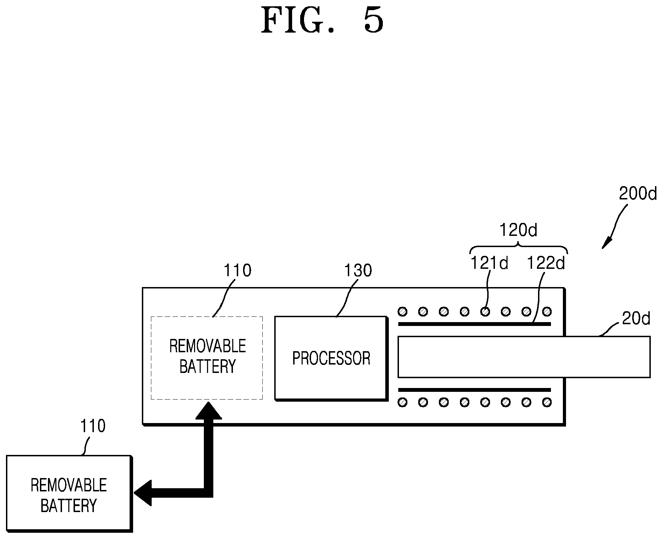

FIG. 5 is a diagram to describe an aerosol generating device 200d using induction heating, according to an embodiment. The aerosol generating device 200d may be one type of the aerosol generating device 100.

Referring to FIG. 5, the aerosol generating device 200d may include a heater 120d including a coil 121d and a susceptor 122d, a removable battery 110, and a processor 130.

The aerosol generating device 200d may generate aerosols by heating the cigarette 20d, received in the aerosol generating device 200d, using induction heating. The induction heating may refer to a method of heating a magnetic substance by applying an alternating magnetic field whose direction changes periodically to the magnetic substance that is heated by an external magnetic field. Therefore, the aerosol generating device 200d may release thermal energy from the magnetic substance by applying the alternating magnetic field to the magnetic substance and may heat the cigarette 20d by transferring the thermal energy released from the magnetic substance to the cigarette 20d. Here, the magnetic substance that generates heat due to the external magnetic field may be the susceptor 125. The susceptor 125 may be provided in the aerosol generating device 200d. Alternatively, the susceptor 125 may not be provided in the aerosol generating device 200d, but instead may be provided inside the cigarette 20d in the shape of a piece, a thin piece, a strip, or the like.

The susceptor 125 may be formed of a ferromagnetic substance. For example, the material of susceptor 125 may include a metal or carbon. The material of the susceptor 125 may include at least one of ferrite, a ferromagnetic alloy, stainless steel, and aluminum (Al). In addition, the material of the susceptor 125 may include at least one of a ceramic, such as graphite or zirconia, a transition metal, such as nickel (Ni) or cobalt (Co), and a metalloid, such as boron (B) or phosphorus (P).

The aerosol generating device 200d may receive the cigarette 20d. A space for receiving the cigarette 20d may be formed in the aerosol generating device 200d. The susceptor 125 may be arranged around the space for receiving the cigarette 20d. For example, the susceptor 125 may have a cylindrical shape that surrounds the exterior of the cigarette 20d. Therefore, when the cigarette 20d is received in the aerosol generating device 200d, the cigarette 20d may be received in the receiving space of the susceptor 125, and the susceptor 125 may be arranged in a position to surround at least a part of the outer surface of the cigarette 20d. However, the shape of the susceptor 125 is not limited thereto and may vary.

As the heater 120d uses induction heating, the heater 120d may heat the cigarette 20d received in the aerosol generating device 200d by using the susceptor 125 that generates heat due to the external magnetic field generated by the coil 121d.

The coil 121d arranged to be wound along the outer surface of the susceptor 125 may apply the alternating magnetic field to the susceptor 125. When the power is supplied from the aerosol generating device 200d to the coil 121d, the magnetic field may be formed in an inner area of the coil 121d. When an alternating current is applied to the coil 121d, the direction of the magnetic field formed inside the coil 121d may be continuously changed. When the susceptor 125 is located inside the coil 121d and is exposed to the alternating magnetic field whose direction periodically changes, the susceptor 125 may generate heat and the cigarette received in the susceptor 125 may be heated. The shape of the coil 121d may be a cylindrical shape wound along the cigarette 20d in the longitudinal direction, but is not limited thereto. The coil 121d may also be implemented as various types, such as a planar coil.

The removable battery 110 may be removed from or mounted on the aerosol generating device 200d, and when the removable battery 110 is mounted on the aerosol generating device 200d, for example, the power may be supplied to the coil 121d for the heating operation of the heater 120d.

The processor 130 may control the heating operation of the heater 120d by controlling the power supplied to the coil 121d. For example, by adjusting the strength of the magnetic field induced by the coil 121d, the processor 130 may control the temperature at which the cigarette 20d is heated by the induction heating of the susceptor 125, according to the temperature profile.

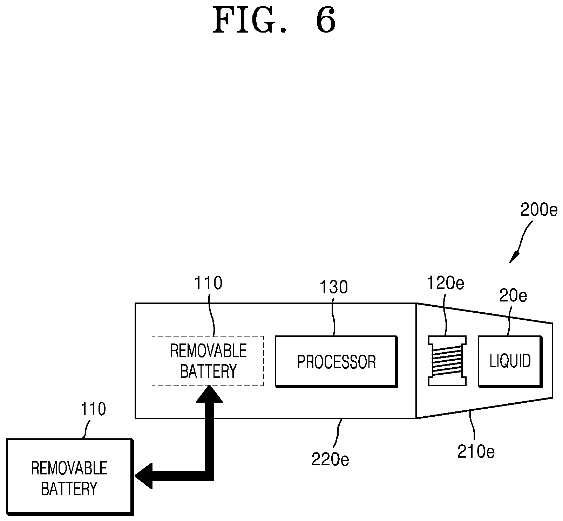

FIG. 6 is a diagram to describe an aerosol generating device 200e including a replaceable cartridge 210e including an aerosol generating material 20e, according to an embodiment.

The aerosol generating device 200e of FIG. 6 includes the cartridge 210e containing the aerosol generating material 20e, and a body 220e supporting the cartridge 210e. The aerosol generating device 200e may correspond to one type of the aerosol generating device 100 of FIG. 1. In this case, hardware components included in the aerosol generating device 100 of FIG. 1 may be separately arranged in the body 220e and the cartridge 210e.

The cartridge 210e may be coupled to the body 220e while accommodating the aerosol generating material 20e therein. The cartridge 210e may be mounted to the body 220e by inserting a portion of the cartridge 210e into a receptacle of the body 220e.

The cartridge 210e may contain the aerosol generating material 20e of the liquid composition, but is not limited thereto, and may contain the aerosol generation material 20e having any state, such as a solid state, a gaseous state, or a gel state. For example, the liquid composition may be a liquid including a tobacco-containing material including a volatile tobacco flavor component, and may also be a liquid including a non-tobacco material.

The heater 120e provided in the cartridge 210e performs a heating operation by an electric signal or a wireless signal transmitted from the body 220e. Accordingly, the aerosols may be generated by vaporizing the aerosol generating material 20e inside the cartridge 210e due to heating by the heater 120e.

The heater 120e may be implemented as a conductive filament made of a metal, such as copper, nickel, or tungsten, a ceramic heating element, or the like, and may be wound around the liquid transfer means or arranged adjacent to the liquid transfer means, so as to heat the aerosol generating material 20e transferred to the liquid transfer means by generating heat by electrical resistance.

The removable battery 110 may be removed from or mounted on the aerosol generating device 200e, and when the removable battery 110 is mounted on the aerosol generating device 200e, the power may be supplied from the removable battery 110 to the heater 120e for the heating operation of the heater 120e.

The processor 130 may control the heating operation of the heater 120e by controlling the power supplied to the heater 120e. For example, the processor 130 may control the temperature at which the aerosol generating material 20e is heated by the heater 120e, according to a temperature profile.

On the other hand, although not shown in FIGS. 2 to 6, the aerosol generating devices 200a to 200e may constitute a system with a separate cradle. For example, the cradle may store the aerosol generating devices 200a to 200e or perform charging of the removable battery 110 of the aerosol generating devices 200a to 200e.

According to various embodiments, the aerosol generating device 100 of FIG. 1 may be implemented as at least one type of the aerosol generating devices 200a to 200e of FIGS. 2 to 6, but is not necessarily limited thereto and may be implemented as another type.

The aerosol generating devices 200a to 200e of FIGS. 2 to 6 may commonly use the removable battery 110 as a power source. The removable battery 110 is a battery that can be replaced by being mounted on or removed from the aerosol generating devices 200a to 200e.

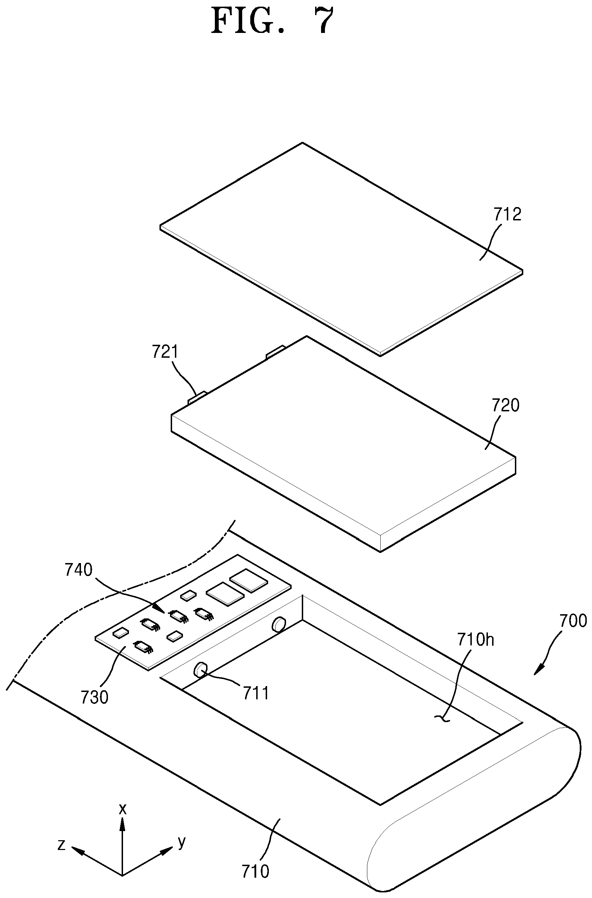

FIG. 7 is an exploded perspective view of some components of an aerosol generating device according to an embodiment. Although only a housing 710, a removable battery 720, and a battery cover 712 of an aerosol generating device 700 are illustrated in FIG. 7, components of the aerosol generating device 700 are not limited to the components illustrated in the drawing.

Referring to FIG. 7, the aerosol generating device 700 according to an embodiment may include the housing 710, the battery cover 712, the removable battery 720, and a battery protection circuit 740. The aerosol generating device 700 may be one embodiment of the aerosol generating devices of FIGS. 1 to 6, and duplicate descriptions thereof are omitted below.

The housing 710 may form an overall exterior of the aerosol generating device 700, and various components of the aerosol generating device 700 including a processor (e.g., the processor 130 of FIGS. 2 to 6) may be arranged in the housing 710.

According to an embodiment, a housing 710 may include a battery receiving space 710h for receiving the removable battery 720. For example, the battery receiving space 710h may be formed in one area (e.g., an area facing the x-direction) of the housing 710 to receive the removable battery 720, but the position of the battery receiving space 710h is not limited thereto.

At least one terminal 711 may be arranged in the battery receiving space 710h, and when the removable battery 720 is coupled to or received in the battery receiving space 710h, the at least one terminal 711 may be in contact with an electrode 721 of the removable battery 720. Although only an embodiment in which two terminals 711 are arranged on a side surface of the battery receiving space 710h is shown in the drawing, the arrangement structure and the number of the at least one terminal 711 are not limited thereto.

The removable battery 720 may be detachably coupled to the battery receiving space 710h of the housing 710 and may supply the power for operations of the components of the aerosol generating device 700. For example, when the removable battery 720 is coupled to the battery receiving space 710h, the electrode 721 of the removable battery 720 may be in contact with the at least one terminal 711, and thus the components (e.g., heater, processor) of the removable battery 720 may be electrically connected to the aerosol generating device 700. The removable battery 720 may supply the power to the components of the aerosol generating device 700 that are electrically connected thereto to operate the components of the aerosol generating device 700.

According to an embodiment, the aerosol generating device 700 may further include the battery cover 712 for securing the removable battery 720 in the battery receiving space 710h. The battery cover 712 may be detachably coupled to the housing 710 and may open or close the battery receiving space 710h. For example, when the battery cover 712 is removed from the housing 710, the battery receiving space 710h may be exposed to the outside of the aerosol generating device 700, which allows the removable battery 720 to be coupled to the battery receiving space 710h. In another example, when the battery cover 712 is coupled to the housing 710, the battery receiving space 710h may be covered by the battery cover 711 and may not be exposed to the outside, and the battery 720 received in the battery receiving space 710h may be secured in the battery receiving space 710h.

According to another embodiment, the aerosol generating device 700 may further include a securing member (not shown) arranged in the battery receiving space 710h and configured to secure the removable battery 720 into the battery receiving space 710h. In this case, the aerosol generating device 700 may secure the removable battery 720 into the battery receiving space 710h without the battery cover 712, and the removable battery 720 may form the exterior of the aerosol generating device 700 together with the housing 710.

When the removable battery 720 is coupled to the battery receiving space 710h, the battery protection circuit 740 (or a protection circuit module (PCM)) may be electrically connected to the removable battery 720 to protect and/or manage the removable battery 720. For example, the battery protection circuit 740 may be arranged to be electrically connected to the at least one terminal 711, and thus may be electrically connected to the removable battery 720 in contact with the at least one terminal 711.

According to an embodiment, the battery protection circuit 740 may be disposed on a PCB 730 arranged in one area of the housing 710 adjacent to the battery receiving space 710h. The PCB 730 may be arranged in one area of the housing 710 away from the heater (not shown), and thus the battery protection circuit 740 may also be spaced apart from the heater by a certain distance.

As described above with reference to FIGS. 1 to 7, the aerosol generating device according to an embodiment uses a removable battery to supply the power, and thus has an advantage of reusing and recycling the battery when the battery's lifespan ends, when the user wants to use another battery with a different battery capacity, or for other reasons.

However, when the aerosol generating device is provided with a removable battery, the removable battery may be unintentionally detached by external impact or vibration. At this time, when the removable battery is removed, the aerosol generating device may suffer fatal damage, such as data loss, due to sudden power-off. Therefore, a method of protecting a system of the aerosol generating device when the removable battery is abnormally removed due to an impact is required.

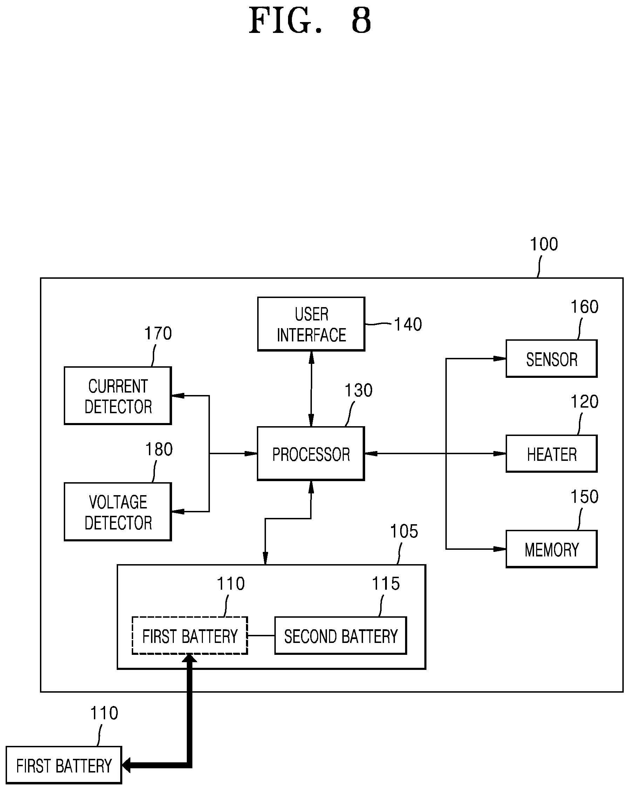

FIG. 8 is a block diagram illustrating hardware components of an aerosol generating device according to an embodiment.

Referring to FIGS. 7 and 8, the aerosol generating device 100 may include a power source 105, a heater 120, a processor 130, a user interface 140, memory 150, a sensor 160, a current detector 170, and a voltage detector 180. However, hardware components inside the aerosol generating device 100 are not limited to those shown in FIG. 8. It may be understood by those skilled in the art that, according to the design of the aerosol generating device 100, some of the hardware components shown in FIG. 8 may be omitted or a new component (e.g., a communications module) may be further added.

Hereinafter, the operation of each component included in the aerosol generating device 100 is described without limiting the space where the components are located.

The power source 105 supplies the power used to operate the aerosol generating device 100. For example, the power source 105 may supply the power to heat the heater 120. That is, the power source 105 may supply the power necessary for the operation of the heater 120, the processor 130, the user interface 140, the memory 150, the sensor 160, or the current detector 170, which are other hardware components included in the aerosol generating device 100.

The power source 105 may include a first battery 110 and a second battery 115 connected in parallel to the first battery 110. The first battery 110 may have a first discharge rate and the second battery 115 may have a second discharge rate greater than the first discharge rate. In the present disclosure, the 'discharge rate' may refer to a voltage change rate of a battery during a specified time interval when the battery is discharged. The first battery 110 may have a first capacity as a main power source, and the second battery 115 may have a second capacity less than the first capacity as an auxiliary power source.

As a replaceable (removable type) power source, the first battery 110 described with reference to FIG. 8 may have the same configuration as the removable battery 110 described with reference to FIGS. 2 to 6 or the removable battery 720 described with reference to FIG. 7. The power source 105 may have the second discharge rate when the first battery 110 is removed from the aerosol generating device 100. On the other hand, when the first battery 110 is mounted, the power source 105 may have a third discharge rate that is less than the first discharge rate and the second discharge rate due to the parallel connection between the first battery 110 and the second battery 115.

When the first battery 110 is mounted, the third discharge rate of the power source 105 may be calculated by the following formula:

third discharge rate = (first discharge rate × second discharge rate)/(first discharge rate + second discharge rate).

As a replaceable (removable type) power source, the first battery 110 may be mounted in a battery receiving space provided in the aerosol generating device 100 or may be removed from the battery receiving space. The first battery 110 may be, but is not limited to, a lithium polymer (LiPoly) battery or a lithium ion battery.

To describe the electrical contact of the first battery 110 with reference to FIG. 7 when the first battery 110 is mounted on the aerosol generating device 100, the electrode 721 of the removable battery 720 may be in contact with at least one terminal 711, and thus the removable battery 720 and the components (e.g., heater and the processor) of the aerosol generating device 700 may be electrically connected to each other.

As another example, the first battery 110 may be provided with a charging coil (transmitting/receiving coil) for supplying the power to the aerosol generating device 100 using wireless charging, instead of a separate electrical contact. That is, the power supply method of the first battery 110 may vary, and the electrical connection method between the first battery 110 and the aerosol generating device 100 may vary depending on the power supply method supported by the first battery 110.

The first battery 110 may include a charger interface (not shown) that can be connected to an external charger. The power may be provided to the first battery 110 to charge the first battery 110 through the charger interface. The first battery 110 may be charged by the external charger while being coupled to or removed from the aerosol generating device 100.

As a built-in power source, the second battery 115 may be arranged inside the housing. As a removable power source, the first battery 110 may be removed abnormally due to an impact or the like. As a built-in power source, the second battery 115 connected in parallel to the first battery 110 is less likely to be abnormally removed, due to an impact or the like, than the first battery 110. In the aerosol generating device 100 according to an embodiment, since the power can be supplied through the second battery 115 even when the first battery 110 is abnormally removed, fatal damage, such as data loss, due to sudden power-off may be prevented. The second battery 115 preferably has a relatively high discharge rate to quickly supply the power in response to abnormal disconnection of the first battery 110. For example, the second battery 115 may be configured as a supercapacitor having a high discharge rate. Since the supercapacitor having a high discharge rate is relatively expensive, compared to the first battery 110, the capacity of the second battery 115 may not be configured to be as high as that of the first battery 110 in terms of cost. That is, the second battery 115 has a greater discharge rate than the first battery 110, but the battery capacity thereof is preferably configured to be relatively small. Therefore, the second battery 115, as an auxiliary power source, has a limitation in that the power can be supplied for a relatively short time in response to abnormal disconnection of the first battery 110 which is a main power source.

The heater 120 is supplied with the power from the power source 105 under the control by the processor 130. The heater 120 may use the power supplied from the power source 105 to perform a heating function of heating a cigarette inserted into the aerosol generating device 100 or heating a cartridge mounted on the aerosol generating device 10. That is, the heater 120 may generate aerosols by heating the aerosol generating material provided in the cigarette or the cartridge.

The heater 120 may be located in a body of the aerosol generating device 100. Alternatively, when the aerosol generating device 100 is composed of a body and a cartridge, the heater 120 may be located in the cartridge. When the heater 120 is located in the cartridge, the heater 120 may be supplied with the power from the power source 105 located in the body.

The heater 120 may be implemented as a heater using electrical resistance heating, formed of an electrically resistive material. For example, the electrically resistive material may be a metal or a metal alloy including, but not limited to, titanium, zirconium, tantalum, platinum, nickel, cobalt, chromium, hafnium, niobium, molybdenum, tungsten, tin, gallium, manganese, iron, copper, stainless steel, nichrome, and the like. The heater 120 may be implemented as, but not limited to, a metal wire, a metal plate on which an electrically conductive track is arranged, a ceramic heating element, or the like.

The heater 120 may be implemented as a heater using induction heating. The heater 120 may correspond to a heater assembly implemented as a set of electrically conductive coils and susceptors for heating a cigarette or a cartridge by induction heating.

The heater 120 may heat a cigarette inserted into the receiving space provided in the aerosol generating device 100. As the cigarette is received in the receiving space of the aerosol generating device 100, the heater 120 may be located inside and/or outside the cigarette. In this way, the heater 120 may heat the aerosol generating material in the cigarette to generate aerosols.

On the other hand, the heater 120 may be implemented as a coil heater provided only in the cartridge. The cartridge may include a coil heater, a liquid transfer means, and a liquid storage portion, wherein the aerosol generating material stored in the liquid storage portion is transferred to the liquid transfer means and the coil heater heats the aerosol generating material absorbed in the liquid transfer means to generate aerosols. For example, when the heater 120 is a coil heater, it may be made of a material, such as nickel chromium, and wound around the liquid transfer means or arranged adjacent to the liquid transfer means.

The processor 130 is hardware that controls the overall operation of the aerosol generating device 100. The processor 130 may include at least one processing unit, such as a micro controller unit (MCU). The processor 130 may be implemented as an array of multiple logic gates or may be implemented as a combination of a general-purpose microprocessor and memory where a program executable on the microprocessor is stored. In addition, those skilled in the art may understand that the present disclosure may also be implemented in other forms of hardware.

The processor 130 may analyze the result sensed by the sensor 160 and may control processes to be subsequently performed based on the analyzed result. For example, the processor 130 may control, based on the result sensed by the sensor 160, the power supplied to the heater 120 to start or end the operation of the heater 120. In addition, the processor 130 may control, based on the result sensed by the sensor 160, the amount of power supplied to the heater 120 and the time for which the power is supplied so that the heater 120 may be heated to a certain temperature or maintained at an appropriate temperature.

The processor 130 may control the operation of the heater 120 based on a pre-stored temperature profile. In addition, the processor 130 may control the temperature of the heater 120 after sensing the user's puff by using a puff sensor in the sensor 160. In addition, the processor 130 may count the number of puffs by using the puff sensor and stop supplying the power to the heater 120 when the number of puffs reaches a preset number.

The processor 130 may control the user interface 140 based on the sensed result. For example, if the number of puffs reaches a preset number after the number of puffs is counted by using the puff sensor, the processor 130 may notify the user that the aerosol generating device 100 is about to end by using a lamp, a motor, or a speaker.

The processor 130 may calculate the discharge rate of the power source 105 based on the current detected by the current detector 170 or the voltage detected by the voltage detector 180. For example, the processor 130 may calculate the discharge rate of the power source 105 based on an average current output by the power source 105 during a specified time interval based on the output current of the power source 105 detected by the current detector 170. In addition, the processor 130 may calculate the discharge rate of the power source 105 based on a voltage change output by the power source 105 during a specified time interval based on the output voltage of the power source 105 detected by the voltage detector 180.

The processor 130 may compare the calculated discharge rate with a predetermined reference value to monitor whether the first battery 110 is normally coupled or whether the first battery 110 is removed. Specifically, when the discharge rate of the power source 105 is greater than the reference value by comparing the discharge rate of the power source 105 with the reference value, the first battery 110 may determine that the first battery 110 is removed from the second battery 115. For example, the processor 130 may determine that the electrode of the first battery 110 is electrically disconnected from the terminal of the battery receiving space.

The reference value may be determined based on the first discharge rate and the second discharge rate. when the first battery 110 is removed as a replaceable (removable type) power source, the power source 105 may have a second discharge rate. On the other hand, when the first battery 110 is mounted, the power source 105 may have a third discharge rate that is less than the first discharge rate and the second discharge rate, due to the parallel connection between the first battery 110 and the second battery 115. Specifically, the third discharge rate may be calculated by the following formula:

third discharge rate = (first discharge rate × second discharge rate)/(first discharge rate + second discharge rate).

The reference value may be determined to be a value greater than the third discharge rate and less than the second discharge rate. The predetermined reference value may be stored in the memory 150.

In addition, the processor 130 may compare the calculated discharge rate with data on the pre-stored discharge rate to monitor whether the first battery 110 is normally coupled or whether the first battery 110 is removed. For example, the processor 130 may compare the calculated discharge rate of the power source 105 with the data on the discharge rates of the batteries stored in the memory 150 to determine whether the first battery 110 is removed.

In an embodiment, the processor 130 may count a time for which the first battery 110 is removed and may execute a protection process for saving system data of the aerosol generating device 100 if the time for which the first battery 110 is removed is maintained for a certain time. The system data to be saved includes data for controlling the heating function of the heater 120. In addition, the system data may further include usage data stored while the aerosol generating device 100 is used, and the like.

The protection process may include one or more various processes.

Specifically, 'protection process A' may be a process of resetting a system currently running on the aerosol generating device 100. For example, the 'protection process A' may refer to a reset operation for interrupting control of the heating operation of the heater 120 to initialize the operation of the heater 12 when the heater 120 is currently being heated. Alternatively, the 'protection process A' may refer to a reset operation for initializing the sensing operation of various sensors provided in the aerosol generating device 100, the display operation of the user interface, and the like. That is, the 'protection process A' may correspond to a process of initializing the system of the aerosol generating device 100 to prevent errors from occurring in functions currently operating in the aerosol generating device 100 due to a sudden power outage.

Next, 'protection process B' may include a process of suspending processes currently being executed in the aerosol generating device 100 and backing up the system data while the processes currently being executed are suspended.

Specifically, the 'protection process B' may be a process for keeping the current system state and data state of the aerosol generating device 100 intact. For example, the 'protection process B' may correspond to a process of instantaneously backing up the system data on what functions are being executed in the aerosol generating device 100, and the usage data or log data accumulated according to usage of the aerosol generating device 100, to the memory 150. That is, the 'protection process B' may be a process of backing up the data stored in the aerosol generating device 100, so that the system data in the aerosol generating devices 100 is not lost due to a sudden power outage. On the other hand, when the 'protection process B' is executed and the occurrence of impact on the aerosol generating device 10 is terminated, the processor 130 may execute a restoration process for restoring the aerosol generating device 100 to the previous system state based on the backup data.

The 'protection process C' may be a process of performing system termination of the aerosol generating device 100 to turn off the power source. The 'protection process C' may refer to performing a normal power-off process in advance to prevent the aerosol generating device 100 from being abnormally powered off due to the first battery 110 being removed for a certain time and all of the electrical energy stored in the second battery 115 being consumed.

The execution of the protection process according to the embodiment may refer to performing only any one of the protection processes A, B, and C exemplified above or may refer to performing two or more of the protection processes of A, B and C in combination. Alternatively, the execution of the protection process according to the embodiment may include performing another process for protecting the system of the aerosol generating device 100 while preventing abnormal power-off of the aerosol generating device 100, in addition to the protection processes A, B, and C.

The user interface 140 may provide the user with information on a state of the aerosol generating device 100. The user interface 140 may include various interfacing means, such as a display or a lamp that outputs visual information (UI screen), a motor that outputs tactile information, a speaker that outputs sound information, input/output (I/O) interfacing means (e.g., a button or a touchscreen) that receives information input from the user or outputs information to the user, and terminals for receiving the charging power.

The memory 150 is hardware for storing various types of data processed in the aerosol generating device 100, and the memory 150 may store data to be processed and data processed in the processor 130. The memory 150 may be implemented as various types, such as random-access memory (RAM) including dynamic random-access memory (DRAM) or static random-access memory (SRAM), read-only memory (ROM), and electrically erasable programmable read-only memory (EEPROM).

The memory 150 may store data necessary for controlling the heating operation of the heater 120, such as an operation time of the aerosol generating device 100, a maximum number of puffs, and a temperature profile, and various usage data, such as smoking information of the user and information for battery authentication, stored while the aerosol generating device 100 is used.

Meanwhile, the memory 150 may also store backup and restore data for performing a backup process and a restore process for maintaining various data in the aerosol generating device 100 before and after battery replacement during a replacement process of the first battery 110. In addition, the memory 150 may store the backup and restore data to prevent data loss due to abnormal disconnection of the first battery 110.

Meanwhile, the memory 150 may store data on a discharge rate of the battery. Specifically, the memory 150 may store a reference value to determine whether the first battery 110 is normally coupled or whether the first battery 110 is removed.

The sensor 160 may include a puff sensor. The puff sensor may sense a puff of the user based on at least one of a change in the flow of air flowing in from the outside, a change in pressure, and detection of sound. The processor 130 may detect a start timing and an end timing of the puff of the user by using the puff sensor, thereby counting the number of puffs.

The sensor 160 may include a user input sensor. The user input sensor may be a sensor capable of receiving the user's input, such as a switch, a physical button, or a touch sensor.

The sensor 160 may include a cigarette sensing sensor capable of sensing whether a cigarette has been inserted or removed. The cigarette sensing sensor may refer to a sensor that detects the presence or absence of a cigarette without mechanical contact by measuring a change in an electrical signal according to interaction with the cigarette, such as an inductance sensor, a capacitance sensor, an infrared sensor, a color sensor, or the like.

The sensor 160 may include various sensors that measure information of the surrounding environment of the aerosol generating device 100. For example, the sensor 160 may include a temperature sensor capable of measuring the temperature of the surrounding environment, a humidity sensor capable of measuring the humidity of the surrounding environment, a moisture sensor capable of sensing liquid leakage or immersion of the aerosol generating device 100, and an atmospheric pressure sensor capable of measuring pressure of the surrounding environment.

The sensor 160 that can be provided in the aerosol generating device 100 is not limited to the above-described types and may further include various sensors. For example, the aerosol generating device 100 may include a fingerprint sensor that can obtain fingerprint information from a finger of the user for user authentication and security, an iris recognition sensor that analyzes an iris pattern of the eye pupil, a vein recognition sensor that senses an amount of infrared absorption of reduced hemoglobin in the vein from an image taken of the palm, a facial recognition sensor that two dimensionally or three dimensionally recognizes feature points, such as an eye, a nose, a mouth, and a facial contour, and a radio-frequency identification (RFID) sensor.

Only some of the examples of the various sensors 160 illustrated above may be selected and implemented in the aerosol generating device 100. In other words, the aerosol generating device 100 may combine and utilize information sensed by the at least one or more sensors described above.

The current detector 170 may detect a current output from the power source 105 based on an electrical coupling formed through a connector connected with the power source 105.

The voltage detector 180 may detect a voltage output from the power source 105 based on an electrical coupling formed through a connector connected with the power source 105.

The aerosol generating device 100 may receive the power from the first battery 110 or access a PCM of the first battery 110 through the connector contact (or connector coupling) with the first battery 110.

The first battery 110 may be coupled to the aerosol generating device 100 by being secured to the battery receiving space 710h having, e.g., a hook structure. In another example, a magnetic substance provided in a part of the first battery 110 may be magnetically coupled to some electromagnet areas of the battery receiving space 710h by using an electromagnet. That is, a method by which the first battery 110 according to the embodiment is mounted on the aerosol generating device 100 is not limited to any one and may be implemented in various ways.

The impact may unintentionally separate the first battery 110 from the aerosol generating device 100. When such abnormal disconnection occurs, the power supply of the first battery 110 is instantaneously cut off, which may cause the power supply to the hardware components included in the aerosol generating device 100 to be interrupted, resulting in a software or hardware failure. To prevent such a phenomenon, the aerosol generating device 100 according to the embodiment may configure the power source 105 by connecting the second battery 115, as an auxiliary power source, built in the aerosol generating device 10 to the first battery 110 in parallel, thereby preventing the aerosol generating device 100 from being immediately powered off even when the first battery 110 is removed by an impact.

On the other hand, although not shown in FIG. 1, the aerosol generating device 100 may constitute an aerosol generating system together with a separate cradle. For example, the cradle may be used to charge the first battery 110 of the aerosol generating device 100 while accommodating the aerosol generating device 100. That is, it may be a dedicated device for the aerosol generating device 100 that receives the power from the battery of the cradle and charges the first battery 110 of the aerosol generating device 100 while the aerosol generating device 100 of the cradle is accommodated in the receiving space inside the cradle.

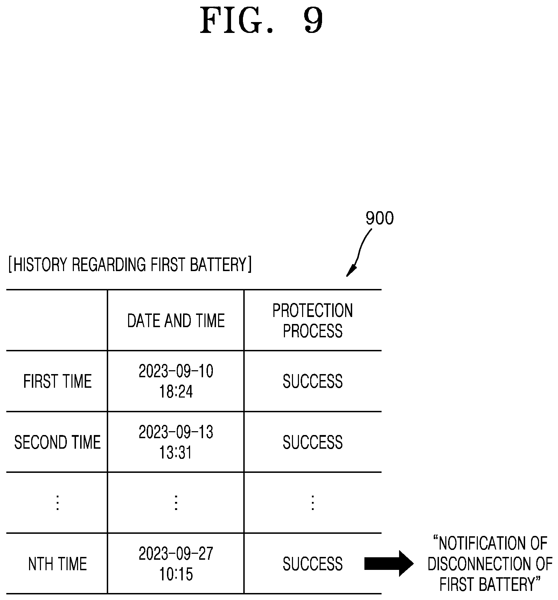

FIG. 9 is a diagram to describe history information regarding a first battery in an aerosol generating device, according to an embodiment.

Referring to FIGS. 8 and 9, the history information 900 may include information about the number of times the first battery 110 is removed, the date and time for which the removal occurs, whether a protection process is performed, and the like. The history information 900 may be updated while being stored in the memory 150.

When the first battery 110 is repeatedly removed during use of the aerosol generating device 100, the first battery 110 itself may be defective or the terminal (e.g., a terminal 711 in FIG. 7) of the battery receiving space electrically connected to the first battery 110 may be defective. For example, the terminal of the battery receiving space itself may be damaged or an electrical connection between the first battery 110 and the terminal of the battery receiving space may be damaged due to external foreign substances or the like.

Accordingly, the processor 130 may perform control to notify the user of the hazard in connection of the first battery 110, when the number of removals reaches a certain number (e.g., n times), while managing the history information 900. For example, the processor 130 may control the user interface 140 to provide a notification of removal of the first battery 110.

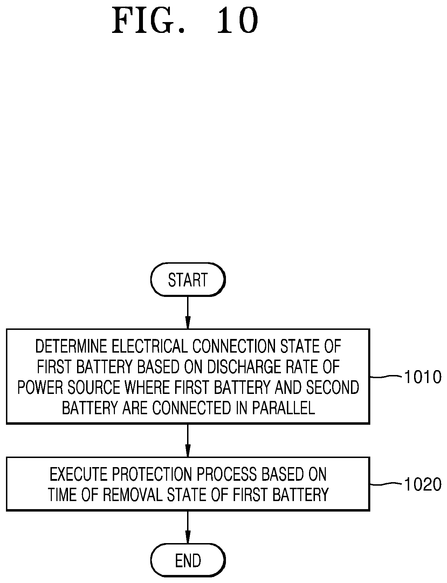

FIG. 10 is a flowchart of a method of protecting an aerosol generating device based on a discharge rate of a power source, according to an embodiment. The method of FIG. 10 corresponds to operations performed chronologically in the drawings described above. Thus, although omitted below, the teachings described above in the drawings may also be applied to the method of FIG. 10.

Referring to FIGS. 8 and 10, in operation 1010, a discharge rate of the power source 105 is calculated based on the current detected by the current detector 170 or the voltage detected by the voltage detector 180, and an electrical connection state of the first battery 110 is determined based on the calculated discharge rate of the power source 105.

In operation 1020, a protection process is performed based on the time for which the first battery 110 is removed. That is, if the time for which the first battery 110 is removed is maintained for a certain time, the processor 130 executes the protection process for preserving system data.

The above-described method may be written as a computer-executable program and may be implemented in a general-purpose digital computer that operates the program by using a computer-readable recording medium. In addition, the structure of the data used in the foregoing method may be recorded on a computer-readable recording medium through various means. The computer-readable recording medium includes a storage medium, such as a magnetic storage medium (e.g., ROM, RAM, USB, floppy disk, hard disk) and an optical recording medium (e. g., CD-ROM, DVD).

A person skilled in the art may understand that the embodiments may be implemented in modified forms without departing from the essential characteristics of the above description. The disclosed methods are, therefore, to be considered in an illustrative rather than a restrictive sense. The scope of the present disclosure is defined by the terms of the claims, rather than the description above, and all differences within the scope will be construed as being included in the present disclosure.

## Claims

1. An aerosol generating device, comprising:
a housing comprising a battery receiving space;

   a heater which is arranged inside the housing and heats an aerosol generating material; and
a power source which supplies power to the heater, wherein the power source comprises:

   a first battery which is detachably coupled to the battery receiving space and supplies power to the heater; and
a second battery which is arranged inside the housing, is connected in parallel with the first battery when the first battery is coupled to the battery receiving space, and supplies the power to the heater.

2. The aerosol generating device of claim 1, further comprising a processor electrically connected to the power source, wherein the processor is configured to calculate a discharge rate of the power source, and compare the calculated discharge rate of the power source with a preset reference value, and determine that the first battery is in a removed state where the first battery is electrically disconnected from the second battery when the discharge rate of the power source is greater than the reference value.

3. The aerosol generating device of claim 1, comprising at least one terminal arranged in the battery receiving space and connected to an electrode of the first battery when the first battery is coupled to the battery receiving space.

4. The aerosol generating device of claim 1, wherein the first battery has a first capacity, and the second battery has a second capacity less than the first capacity.

5. The aerosol generating device of claim 2, wherein the first battery has a first discharge rate,

   the second battery has a second discharge rate greater than the first discharge rate, and
the reference value is determined based on the first discharge rate and the second discharge rate.

6. The aerosol generating device of claim 2, wherein the processor is further configured to manage history information regarding the first battery including the removed state.

7. The aerosol generating device of claim 5, wherein the processor is further configured to count a time of the removed state, and execute a protection process for preserving system data for controlling a heating function of the heater when the time of the removed state is maintained for a certain time.

8. The aerosol generating device of claim 7, wherein the protection process comprises resetting a system currently running on the aerosol generating device.

9. The aerosol generating device of claim 7, wherein the protection process comprises a process of suspending processes currently running on the aerosol generating device and backing up system data while the processes currently running are suspended.

10. The aerosol generating device of claim 9, wherein the system data comprises data required for controlling a heating operation of the heater provided in the aerosol generating device and usage data stored while the aerosol generating device is used.

11. A method of protecting an aerosol generating device, the method comprising:

calculating a discharge rate of a power source including a first battery detachably coupled to the aerosol generating device and a second battery arranged inside the aerosol generating device and connected in parallel with the first battery when the first battery is coupled thereto;
comparing the calculated discharge rate of the power source with a preset reference value, and determining that the first battery is in a removed state where the first battery is electrically disconnected from the second battery when the discharge rate of the powers source is greater than the reference value; and
counting a time of the removed state, and executing a protection process for preserving system data for controlling a heating function of a heater when the time of the removed state is maintained for a certain time, wherein the first battery has a first discharge rate and the second battery has a second discharge rate greater than the first discharge rate, and
the reference value is determined based on the first discharge rate and the second discharge rate.

12. The method of claim 11, further comprising managing history information regarding the first battery including a removed state.

13. The method of claim 11, wherein the protection process comprises a process of resetting a system currently running on the aerosol generating device.

14. The method of claim 11, wherein the protection process comprises a process of suspending processes currently running on the aerosol generating device and backing up system data while the processes currently running are suspended.

15. The method of claim 14, wherein the system data comprises data required for controlling a heating operation of a heater provided in the aerosol generating device and usage data stored while the aerosol generating device is used.

# FIG. 1

# FIG. 2

# FIG. 3

EP 4 755 218 A1

200b

110

REMOVABLE
BATTERY

130

PROCESSOR

125b

VAPORIZER

120b

20b

110

REMOVABLE
BATTERY

# FIG. 4

# FIG. 5

# FIG. 6

# FIG. 7

# FIG. 8

# FIG. 9

[HISTORY REGARDING FIRST BATTERY]

900

|  | DATE AND TIME | PROTECTION PROCESS |
|---|---|---|
| FIRST TIME | 2023-09-10 18:24 | SUCCESS |
| SECOND TIME | 2023-09-13 13:31 | SUCCESS |
| ⋮ | ⋮ | ⋮ |
| NTH TIME | 2023-09-27 10:15 | SUCCESS |

➡ "NOTIFICATION OF DISCONNECTION OF FIRST BATTERY"

# FIG. 10

```
                    ┌─────────┐
                    │  START  │
                    └────┬────┘
                         │
                         ▼
   ┌──────────────────────────────────────────┐
   │  DETERMINE ELECTRICAL CONNECTION STATE OF │
   │   FIRST BATTERY BASED ON DISCHARGE RATE OF│── 1010
   │  POWER SOURCE WHERE FIRST BATTERY AND SECOND│
   │     BATTERY ARE CONNECTED IN PARALLEL     │
   └──────────────────────┬───────────────────┘
                          │
                          ▼
   ┌──────────────────────────────────────────┐
   │     EXECUTE PROTECTION PROCESS BASED ON   │── 1020
   │   TIME OF REMOVAL STATE OF FIRST BATTERY  │
   └──────────────────────┬───────────────────┘
                          │
                          ▼
                    ┌─────────┐
                    │   END   │
                    └─────────┘
```

## INTERNATIONAL SEARCH REPORT

| International application No. |
|---|
| **PCT/KR2024/010762** |

| A. | CLASSIFICATION OF SUBJECT MATTER |
|---|---|

**A24F 40/46**(2020.01)i; **A24F 40/40**(2020.01)i; **A24F 40/95**(2020.01)i; **A24F 40/50**(2020.01)i; **H02J 7/00**(2006.01)i; **A24F 40/42**(2020.01)i; **H01G 11/08**(2013.01)i

According to International Patent Classification (IPC) or to both national classification and IPC

| B. | FIELDS SEARCHED |
|---|---|

Minimum documentation searched (classification system followed by classification symbols)

A24F 40/46(2020.01); A24B 15/16(2006.01); A24F 40/95(2020.01); A24F 47/00(2006.01); H02H 3/087(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 에어로졸(aerosol), 배터리(battery), 히터(heater), 전원(power), 하우징(housing), 병렬 연결(parallel connection), 프로세서(processor), 방전율(discharge rate), 기준값(reference value), 분리 상태(separated state)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2019-0111093 A (RAI STRATEGIC HOLDINGS, INC.) 01 October 2019 (2019-10-01) See paragraphs [0015], [0066]-[0068] and [0078]; and claims 1 and 8. | 1,3,4 |
| A | | 2,5-15 |
| Y | KR 10-2018-0126081 A (RAI STRATEGIC HOLDINGS, INC.) 26 November 2018 (2018-11-26) See paragraph [0078]; and claim 1. | 1,3,4 |
| A | JP 2016-510970 A (HUIZHOU KIMREE TECHNOLOGY CO., LTD. SHENZHEN BRANCH) 11 April 2016 (2016-04-11) See claims 1 and 10. | 1-15 |
| A | KR 10-2020-0111579 A (KT & G CORPORATION) 29 September 2020 (2020-09-29) See claims 1, 2 and 11. | 1-15 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **04 November 2024** | **04 November 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/010762** |

### C.    DOCUMENTS CONSIDERED TO BE RELEVANT

| Category* | Citation of document, with indication, where appropriate, of the relevant passages | Relevant to claim No. |
| --- | --- | --- |
| A | KR 10-2020-0043987 A (PHILIP MORRIS PRODUCTS S.A.) 28 April 2020 (2020-04-28)<br>See claim 1. | 1-15 |

Form PCT/ISA/210 (second sheet) (July 2022)

## INTERNATIONAL SEARCH REPORT
### Information on patent family members

| International application No. |
|---|
| **PCT/KR2024/010762** |

| Patent document cited in search report | | | Publication date (day/month/year) | Patent family member(s) | | | Publication date (day/month/year) |
|---|---|---|---|---|---|---|---|
| KR | 10-2019-0111093 | A | 01 October 2019 | CN | 110381757 | A | 25 October 2019 |
| | | | | CN | 110381757 | B | 13 September 2022 |
| | | | | EP | 3573486 | A1 | 04 December 2019 |
| | | | | EP | 3573486 | B1 | 01 September 2021 |
| | | | | EP | 3903607 | A1 | 03 November 2021 |
| | | | | ES | 2889578 | T3 | 12 January 2022 |
| | | | | JP | 2020-507315 | A | 12 March 2020 |
| | | | | JP | 727038 | B2 | 29 August 2022 |
| | | | | KR | 10-2675573 | B1 | 17 June 2024 |
| | | | | PL | 3573486 | T3 | 20 December 2021 |
| | | | | RU | 2019120353 | A | 01 March 2021 |
| | | | | RU | 2019120353 | A3 | 28 May 2021 |
| | | | | RU | 2768296 | C2 | 23 March 2022 |
| | | | | US | 10517326 | B2 | 31 December 2019 |
| | | | | US | 2018-0213844 | A1 | 02 August 2018 |
| | | | | WO | 2018-138688 | A1 | 02 August 2018 |
| KR | 10-2018-0126081 | A | 26 November 2018 | BR | 112018070185 | A2 | 29 January 2019 |
| | | | | BR | 112018070185 | B1 | 23 February 2023 |
| | | | | CA | 3019757 | A1 | 19 October 2017 |
| | | | | CN | 109068740 | A | 21 December 2018 |
| | | | | CN | 117547069 | A | 13 February 2024 |
| | | | | EP | 3442365 | A1 | 20 February 2019 |
| | | | | EP | 3442365 | B1 | 01 December 2021 |
| | | | | EP | 3972385 | A1 | 23 March 2022 |
| | | | | ES | 2901051 | T3 | 21 March 2022 |
| | | | | JP | 2019-515669 | A | 13 June 2019 |
| | | | | JP | 2022-008448 | A | 13 January 2022 |
| | | | | JP | 2023-082144 | A | 13 June 2023 |
| | | | | JP | 6949870 | B2 | 13 October 2021 |
| | | | | JP | 7258095 | B2 | 14 April 2023 |
| | | | | JP | 7511043 | B2 | 04 July 2024 |
| | | | | KR | 10-2022-0124814 | A | 14 September 2022 |
| | | | | KR | 10-2024-0057438 | A | 02 May 2024 |
| | | | | KR | 10-2437935 | B1 | 30 August 2022 |
| | | | | PH | 12018502098 | A1 | 29 July 2019 |
| | | | | PL | 3442365 | T3 | 28 February 2022 |
| | | | | RU | 2018134927 | A | 12 May 2020 |
| | | | | RU | 2018134927 | A3 | 28 July 2020 |
| | | | | RU | 2739999 | C2 | 30 December 2020 |
| | | | | UA | 126559 | C2 | 02 November 2022 |
| | | | | US | 10945462 | B2 | 16 March 2021 |
| | | | | US | 11589421 | B2 | 21 February 2023 |
| | | | | US | 11844152 | B2 | 12 December 2023 |
| | | | | US | 2017-0290371 | A1 | 12 October 2017 |
| | | | | US | 2021-137171 | A1 | 13 May 2021 |
| | | | | US | 2023-171852 | A1 | 01 June 2023 |
| | | | | US | 2024-074001 | A1 | 29 February 2024 |
| | | | | WO | 2017-178994 | A1 | 19 October 2017 |
| JP | 2016-510970 | A | 11 April 2016 | CN | 104037720 | A | 10 September 2014 |
| | | | | CN | 104037720 | B | 07 September 2018 |

Form PCT/ISA/210 (patent family annex) (July 2022)

## INTERNATIONAL SEARCH REPORT
### Information on patent family members

International application No.

**PCT/KR2024/010762**

| Patent document cited in search report | | | Publication date (day/month/year) | Patent family member(s) | | | Publication date (day/month/year) |
|---|---|---|---|---|---|---|---|
| | | | | EP | 2966743 | A1 | 13 January 2016 |
| | | | | EP | 2966743 | B1 | 30 May 2018 |
| | | | | US | 2014-0258741 | A1 | 11 September 2014 |
| | | | | US | 9025291 | B2 | 05 May 2015 |
| | | | | WO | 2014-134812 | A1 | 12 September 2014 |
| KR | 10-2020-0111579 | A | 29 September 2020 | CN | 112074748 | A | 11 December 2020 |
| | | | | CN | 112074748 | B | 20 October 2023 |
| | | | | EP | 3817596 | A2 | 12 May 2021 |
| | | | | EP | 3817596 | B1 | 17 April 2024 |
| | | | | JP | 2021-518753 | A | 05 August 2021 |
| | | | | JP | 7022908 | B2 | 21 February 2022 |
| | | | | KR | 10-2232204 | B1 | 25 March 2021 |
| | | | | US | 11382360 | B2 | 12 July 2022 |
| | | | | US | 2021-0227891 | A1 | 29 July 2021 |
| | | | | WO | 2020-190002 | A2 | 24 September 2020 |
| | | | | WO | 2020-190002 | A3 | 26 November 2020 |
| KR | 10-2020-0043987 | A | 28 April 2020 | BR | 112020002060 | A2 | 21 July 2020 |
| | | | | CN | 111031827 | A | 17 April 2020 |
| | | | | CN | 111031827 | B | 05 September 2023 |
| | | | | EP | 3672431 | A1 | 01 July 2020 |
| | | | | IL | 272201 | A | 31 March 2020 |
| | | | | IL | 272201 | B1 | 01 May 2023 |
| | | | | IL | 272201 | B2 | 01 September 2023 |
| | | | | JP | 2020-537491 | A | 24 December 2020 |
| | | | | JP | 2023-022289 | A | 14 February 2023 |
| | | | | KR | 10-2024-0034897 | A | 14 March 2024 |
| | | | | PH | 12019502819 | A1 | 14 September 2020 |
| | | | | RU | 2020110006 | A | 23 September 2021 |
| | | | | RU | 2020110006 | A3 | 23 September 2021 |
| | | | | RU | 2756887 | C2 | 06 October 2021 |
| | | | | US | 11552489 | B2 | 10 January 2023 |
| | | | | US | 2020-0253285 | A1 | 13 August 2020 |
| | | | | WO | 2019-037882 | A1 | 28 February 2019 |

Form PCT/ISA/210 (patent family annex) (July 2022)